# EUROPEAN PATENT APPLICATION

(11) **EP 3 236 573 A1**
(43) Date of publication of application: **25.10.2017**
(21) Application number: 15870444.5
(22) Date of filing: 11.12.2015
(51) Int. Cl.: H02M 3/337

(54) **STABILIZED CONTROLLABLE UNIVERSAL HIGH VOLTAGE SOURCE (VARIANTS)**

(30) Priority: 16.12.2014 RU 2014150696; 14.01.2015 RU 2015100242
(71) Applicant: Obschestvo S Ogranichennoy Otvetstvennostyu Istok, Sarov, Nizhegorodskaya obl. 607188 (RU)
(72) Inventor: ALECSANDRIN, Aleksandr Ivanovich, Sarov Nizhegorodskaya obl. 607182 (RU); IVANIN, Igor Aleksandrovich, Sarov Nizhegorodskaya obl. 607188 (RU); DUNAEV, Igor Borisovich, Sarov Nizhegorodskaya obl. 607188 (RU); SHPILKO, Vasily Pavlovich, Sarov Nizhegorodskaya obl. 607186 (RU); BELJANIN, Oleg Valerievich, Zhukovsky Moskovskaya obl. 140180 (RU); DMITRIEV, Aleksandr Vladimirovich, Moscow 123100 (RU); TSYMBALYUK, Vadim Vladimirovich, Zhukovsky Moskovskaya obl. 140180 (RU); DUNAEV, Dmitriy Victorovich, Moscow 1252452 (RU)
(74) Representative: Chimini, Francesco
(86) International application number: PCT/RU2015/000870
(87) International publication number: WO 2016/099336

(57) **Abstract**

The invention relates to a technical field in which high-capacity low voltage and high voltage power supplies are used. The present device contains a power module 1, comprising a frequency transformer 2 with a primary winding 3 and one 4.1 or several 4.1- 4.m secondary windings connected in series to rectifiers 5.1-5.m, which are connected to storage capacitors 6.1-6.m. To the primary winding 3 there is connected a power meter 8, the inputs of which are connected to the outputs of a generator of metered pulses of energy 9 and to a source of constant primary voltage 10. The device is also provided with a microcontroller 14 and a machine interface 15. According to a second variant, the device contains N identical power units, connected in parallel at the output. The claimed invention enables the device to operate in a controlled current source mode, a voltage source mode and a power source mode; the invention further enables the device to adapt to the type of load (resistive, capacitive, complex).

## Description

The group of inventions relates to a pulsed high-voltage engineering and can be used to charge the low-voltage and high-voltage storage capacities, supply highfrequency and ultrahigh-frequency modulators, in X-ray technology, electron beam welding and other fields of technology, using low-voltage and high-voltage high power supply. Known DC power supply [SU 752684, BI Nº28, 1980].

This power supply contains a high voltage transformer having a primary winding W₀ and N secondary windings (W ₁, ... W_{N}). Each of the N secondary windings of the transformer is connected to the input of the rectifier with capacitor filter 2, 3, 4 ...N, wherein the rectifiers output are connected in series. The rectifier is a diode bridge with the filter capacitor on the output.

The high-voltage DC power supply operates as follows. AC main voltage is supplied to the primary winding of the transformer. The transformer converts the voltage level on the primary winding to a predetermined voltage level of the secondary windings. Secondary winding AC voltage is applied to the input of the corresponding rectifier. A DC voltage **U** is generated at the output of each rectifier. Considering the series connection of outputs of the rectifiers, cumulative value of the DC voltage is generated on the output of the power supply, that voltage is equal to N*U and is applied to a load.

An important advantage of this device is the ability to produce high voltage using a relatively low-voltage elements. However, this solution does not provide a reduction in the impact of breakdowns in the load.

The closest technical solution is a high-voltage power supply for electron-beam equipment [Russian patent RU 2349020 C1, 2007.] (Prototype).

This device comprises a high voltage transformer with secondary N windings and N rectifiers with a capacitive filter components, and any of the secondary windings of the transformer is connected to the corresponding input of the rectifier, the rectifiers outputs are connected in series.

The power supply is based on a three-phase step-up transformer, wherein any of the secondary windings of the transformer is connected to the input of one of the N-phase rectifier assemblies, and the rectifiers outputs are connected in series.

To provide an output current limiting mode when arcing in the load there are down type regulators that are connected to each of the N rectifier. The advantage of this device is to eliminate the influence of breakdowns on the current. However, the disadvantages of the device is the absence of power control since only output current limiting mode is used when the arc in the load.

Object of the present invention is to provide a stabilized power supply, with the following main features:
- ability to set the voltage and current in the load at a predetermined current-time, voltage-time or current-voltage curve at the predetermined limits of voltage and current;
- ability to work in voltage source mode (current is determined by the load resistance) and in current source mode (voltage is determined by the load resistance);
- adaptation to the type of load (resistive, capacitive, complex);
- tolerance to short circuit without special protections.

These features of the present invention (variants) determine the flexibility of its use in a variety of technological systems (electron-beam welding, charging high capacitive energy storage, system power highfrequency and ultrahigh-frequency modulators for laser, accelerator, radar technology, as part of the equipment of ion implantation, electronic and ion lithography, as a part of electron microscopy equipment, tomography equipment, X-ray equipment).

The technical result can be obtained by implementing the embodiments of the invention:
- There is possibility of power supply operation in controlled voltage source mode, controlled current source mode, controlled power source mode (depending on the load, the device can be switched to one of the above modes within one work cycle);
- There are time or boundary change to the current, voltage or power settings in the appropriate mode (current source, a voltage source, a power source);
- Theoretically unlimited accuracy and control speed, achievable through the application of its own method of digital control;
- There is the possibility of increasing the power transmitted to the load due to the modularity of the device;
- There is high efficiency due to the operation of each power module optimally with maximum efficiency in comparison with analogues high power supply;

In order to achieve a technical result in solving the problems, proposed stabilized controlled universal high voltage power supply of the embodiment I is included a power module, power module contain transformer with m secondary winding sections and m rectifiers, any section of the secondary windings of the transformer is connected to the corresponding rectifier input, all rectifiers outputs are connected in series, stabilized controlled universal high voltage power supply is equipped with a primary DC power supply, power doser, pulse generator of energy doses, a module for monitoring the output voltage and current, computer interface and MCU, at that the pulse generator of energy doses includes electrically interconnected reference oscillator, pipeline distributor of energy dose and a comparator, wherein the pulse generator of energy doses includes electrically interconnected reference oscillator, pipeline distributor of energy dose and comparator, wherein the power doser is connected to the transformer primary winding and has four inputs, two of them are connected with the primary DC power supply, and the other two inputs are connected to the outputs of pipeline distributor of energy dose, any of m rectifier assemblies are designed as a rectifier, that is connected to the storage capacity, the outputs of storage capacity are connected to the input of module for monitoring the output voltage and current, the monitoring module outputs are connected to the comparator and the MCU, MCU is connected with the computer interface and the outputs of MCU are connected to comparator input of pipeline distributor of energy dose.

Also to achieve the technical result in solving the problems the stabilized controlled universal high voltage power supply of Embodiment I is equipped with pulse generator of energy doses, pulse generator of energy dose contain pipeline distributor of energy dose that has two inputs, one of them is connected to the output of the reference oscillator, the another is connected to output of the comparator, and any of m rectifiers is equipped with an even number of storage capacitances, mounted symmetrically about to the rectifier;

Also to achieve the technical result in solving the problems in a stabilized controlled universal high voltage power supply, the primary DC power supply according to Embodiment I may be formed by either a single-phase or three-phase rectifier scheme; a power doser is formed in a bridge circuit, the switches inputs of power doser are connected to the outputs of the primary DC power supply.

Also to achieve the technical result in solving the problems, the stabilized controlled universal high voltage power supply of Embodiment II, is equipped with the power module that contain transformer with m sections of secondary winding and m rectifiers, any section of the secondary windings of the transformer is connected to the corresponding input of the rectifier, all rectifiers outputs are connected in series, power module is equipped with a primary DC power supply, power doser, pulse generator of energy doses, a module for monitoring the output voltage and current, computer interface and MCU, all of them form power block. Also device is equipped with reference oscillator with n outputs, means of external control and N power blocks, at what any power block includes electrically interconnected reference oscillator, pipeline distributor of energy dose and a comparator, wherein the power doser is connected to the transformer primary winding and power doser has four inputs, two of them are connected to the primary DC power supply, and the other two inputs are connected to the outputs of pipeline distributor of energy dose, each of m rectifier assemblies is designed as a rectifier, that is connected to the storage capacity, the outputs of storage capacity are connected to the input of module for monitoring the output voltage and current, the outputs of that module are connected to the comparator and MCU, MCU is connected to the computer interface and the outputs of MCU is connected to comparator input of pipeline distributor of energy dose, wherein the input of pipeline distributor of energy dose pulses of any N energy blocks is connected to corresponding n output of reference oscillator and each energy block output is connected to the means of external control in parallel;

Also to achieve the technical result in solving the problems in a stabilized controlled universal high voltage power supply of Embodiment II, any computer interface of the N power blocks is connected in parallel by MCU bus and any of **m** power module rectifier is equipped with an even number of storage capacitances, mounted symmetrically with respect to the rectifier;
Also to achieve the technical result in solving the problems in a stabilized controlled universal high voltage power supply, the primary DC power supply according to embodiment II may be formed by either a single-phase or three-phase rectifier scheme; a power doser is formed in a bridge circuit, the bridge switches inputs are connected to the outputs of the primary DC power supply.

Also to achieve the technical result in solving the problems in a stabilized controlled universal high voltage power supply of Embodiment II, in power supply may be introduced even or odd number of power blocks, and the reference oscillator may be designed with the appropriate number of outputs.

These features of the claimed group of inventions are significant and interconnected by the causal relationship, they form a set of essential features that are sufficient to achieve a technical result.

These features are new since their usage is not found in the prior art, analogs and the prototype. These features allow to characterize the proposed variants of the invention as match to the criterion of innovation.

New essential features and well-known features can solve the tasks and can achieve a new technical result in the improvement of design options of the stabilized controlled universal high voltage power supply, the proposed technical solutions are characterized by essential difference from the prior art, analogs and prototype.

The essence of the invention (variants) is illustrated by drawings:
- Fig. 1: - Functional diagram of stabilized controlled universal high voltage power supply (Variant I);
- Fig. 2: - Diagram of functioning of the power block of stabilized controlled universal high voltage power supply (Variant I);
- Fig. 3: - Diagram of functioning of the power block of stabilized controlled universal high voltage power supply operating on the load (Variant I);
- Fig. 4: - Functional diagram of stabilized controlled universal high voltage power supply (Variant II);
- Fig. 5: - Diagram of functioning of the power block (Variant II);
- Fig. 6: - Diagram of functioning of the power block operating on load (Variant II);
- Fig. 7: - A graphical representation of the proposed method of controlling the output parameters for the general case (Variant II);
- Fig. 8: - Diagram of functioning of two power blocks operating in parallel; (Variant II);
- Fig. 9: - Diagram of functioning of four power blocks operating in parallel; (Variant II);
- Fig. 10: - Diagram of functioning of eighth power blocks operating in parallel; (Variant II);

The claimed invention (variants) is illustrated by specific examples that demonstrate the ability to achieve the desired technical result of the above combination of essential features

### Variant 1

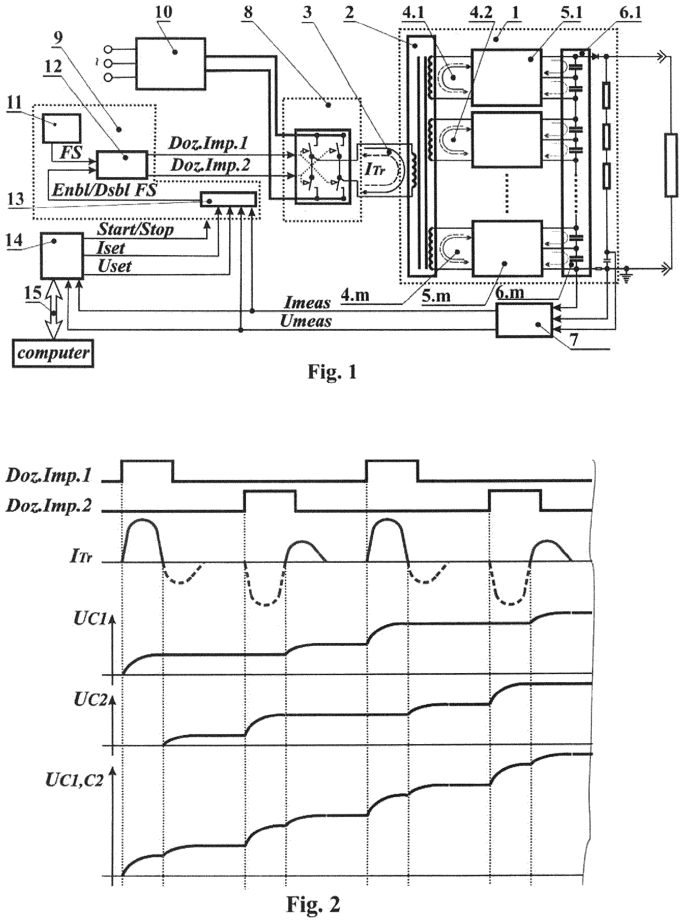

Stabilized controlled universal high voltage power supply comprises a power module **1 (****Figure 1****),** power module **1** includes a frequency transformer **2** with the primary winding **3** and one **4.1** or more **4.1 ÷ 4.m** secondary windings, they provide galvanic isolation between primary voltage and output voltage. Any secondary winding **4.1 ÷ 4.m** is connected in series to one of the rectifiers.

Any secondary winding **4.1 ÷ 4.m** is connected in series with one of the rectifiers **5.1 ÷ 5.m,** rectifiers convert the differently directed current of secondary windings **4.1 ÷ 4.m** to unidirectional branch output current.

Any rectifiers **5**.**1** ÷ **5.m** is equipped with two or more storage capacity **6.1 ÷ 6.m.,** this capacity provide energy storage that is produced by the respective output branch currents from **5.1 ÷ 5.m** rectifiers, also capacity provide voltage doubling. The first and last outputs of **6.1 ÷ 6.m** capacitances are connected to the input module for monitoring the output voltage and current **7.** The power doser **8** is connected to the primary winding **3,** power doser **8** is implemented in a bridge circuit and is operated alternately in forward and reverse current switching mode through the primary winding **3** of the transformer **2.**

Two inputs of power doser **8** are connected with pulse generator of energy dose **9** outputs for receiving energy dose that is generated by the generator in the form of a rectangular control pulses, the pulse width is determined by the energy dose. The other two inputs of power doser **8** are connected to the primary DC power supply **10,** the primary DC power supply may be either a single-phase rectifier or three-phase rectifier circuit, depending on the required output power. Pulse generator of energy dose **9** includes electrically interconnected reference oscillator **11** that generates a reference pulse frequency, pipeline distributor of energy dose **12** that regenerate generator pulses, and a comparator **13.** The pipeline distributor of energy dose **12** has one input that is connected to the output of the reference oscillator **11** and second input that is connected to the output of the comparator **13.** Two inputs of the comparator **13** are connected to the outputs of a module for monitoring the output voltage and current **7.** The device is equipped with a MCU **14** and computer interface **15,** while the MCU **14** is adapted to computer interface **15.** The MCU **14** inputs are connected to the outputs of a module for monitoring the output voltage and current **7** and outputs of the comparator **13,** and MCU output is connected to computer interface **15,** that allows communication with standard external controls.

### Variant II

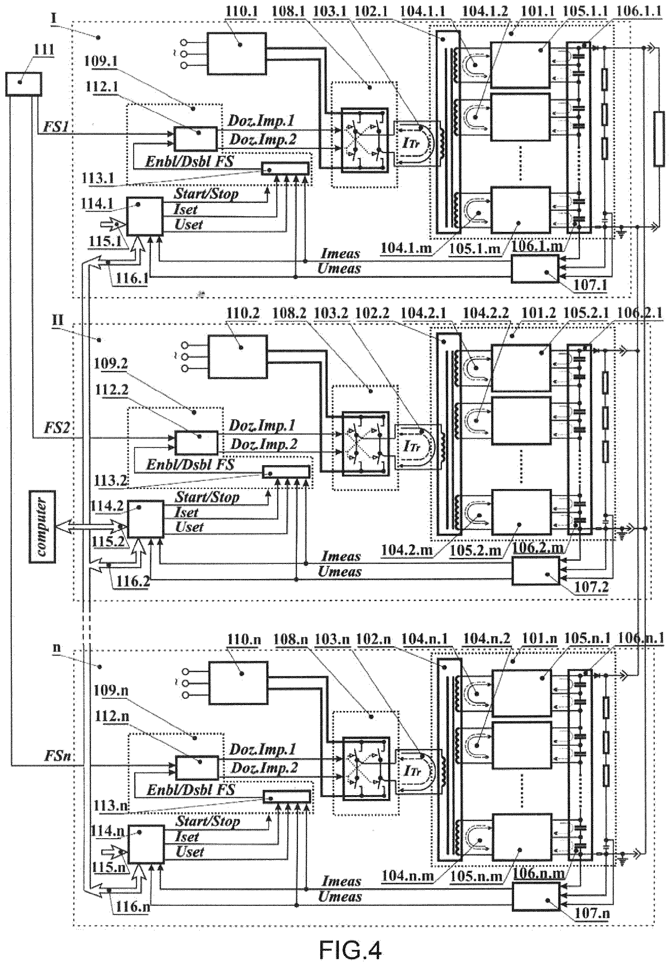

Stabilized controlled universal high voltage power supply comprises from 2 to **n** power blocks designated **I** ÷ **N (****Figure 4****),** any power block outputs are connected to the external load in parallel, any power block is included a reference oscillator **111** with **n** outputs. Power blocks **I** ÷ **N** are designed similar to each other, and therefore the structural content of any of the power blocks **I** ÷ **N** is described in detail on the example of the power block **I.** Power block comprises a power module **101**.**1 (****Figure 4****),** power module **101.1** includes a frequency transformer **102.1** with the primary winding **103.1** and one **104.1.1** or more **104.1.1 ÷ 104.1.m** secondary windings, transformer provide galvanic isolation between the output voltage and the primary voltage. Any secondary winding **104.1.1 ÷ 104.1.m** is connected in series with one of the rectifiers **105.1.1 ÷ 105.1.m,** rectifiers convert the differently directed current of secondary windings **104.1.1 ÷ 104.1.m** to unidirectional branch output current.

Any rectifier **105.1.1 ÷ 105.1.m** is equipped with two or more storage capacity **106.1.1 ÷ 106.1m,** this capacity provide energy storage that is produced by the respective output branch currents from **105.1.1 ÷ 105.1.m** rectifiers, also capacity provide voltage doubling. The first and last outputs of capacitances **106.1.1 ÷ 106.1.m** are connected to the input module for monitoring the output voltage and current **107.1**

The power module **101.1** is included a power doser **108.1,** power supply **110.1,** pulse generator of energy dose **109.1,** pulse generator of energy dose **109.1** comprise electrically interconnected pipeline distributor of energy dose **112.1** and a comparator **113.1** and MCU **114.1,** MCU is connected to computer interface **115.1.** The primary winding **103.1** is connected to the power doser **108.1,** power doser **108.1** is implemented in a bridge circuit and is operated alternately in forward and reverse current switching mode through the primary winding **103.1** of the transformer **102.1.** Two inputs of power doser **108.1** are connected with outputs of pipeline distributor of energy dose **112.1** which is part of pulse generator of energy dose **109.1,** this inputs are used for receiving energy doses that are generated by the generator **109.1** in the form of a rectangular control pulses, the pulse width determines the energy dose. The other two inputs of power doser **108.1** are connected to the primary DC power supply **110.1,** primary DC power supply may be formed either a single-phase rectifier or three-phase rectifier circuit, depending on the required output power.

One input of pipeline distributor of energy dose **112.1** is connected with one of the **n** outputs of the reference oscillator **111,** second input of pipeline distributor of energy dose **112.1** connected to the output of the comparator **113.1.** Two inputs of the comparator **113.1** are connected to the outputs of the module for monitoring the output voltage and current **107.1.** The MCU **114.1** inputs are connected to the outputs of a module for monitoring the output voltage and current **107.1** and to the outputs of the comparator **113**.**1**, and MCU output is connected to computer interface **115.1,** computer interface allows communication with standard external controls. MCU **114.1** is connected to the MCU bus **116.1** for information exchange with the power blocks **II-N** that are operated simultaneously.

Due to the fact that each of the power blocks **I ÷ N (****Figure 4****)** is designed identically, each input of pipeline distributor of energy dose pulses **112.2 ÷ 112.n** are connected with corresponding **n** outputs of the reference oscillator **111.** In addition, the connection one of a MCU **114.1 ÷ 114.n** to the computer interface for communication with external controls automatically makes this MCU "master", while the rest of the MCU **114.1 ÷ 114.n** become "slaves". On **Fig. 4****,** MCU **114.2** is master. **Stabilized controlled universal high voltage power supply operate as follows:**

### Variant I

The device is controlled by commands from an external control, coming through the computer interface **15** to the MCU **14,** MCU transmits them as signals to the pulse generator **9** and dosing comparator **13.** By means of the reference oscillator **11,** comparator **13** and the pipeline distributor of energy dose pulses **12** two rectangular dose pulses are formed with strictly predetermined duty cycle: **Doz.Imp.1** and **Doz.Imp.2,** this pulses are applied to power doser **8.** Power doser 8 receives a fixed quantity of energy from the primary DC power supply. One power dose calculate according to the formula: ***E*** = ***U*** · *I* · **τ_{dz},**
where **U -** voltage of the primary DC voltage;
**I -** current of primary winding;
**τ_{dz}** - **Doz.Imp.1** and **Doz**.**Imp**.**2** pulse width;
**Doz.Imp.1** pulse turn on the corresponding switch pair of power doser **8.** Direct current **Iₜᵣ** in half wave form (solid line, **Fig. 2****)** flow from the primary DC power supply **10** through the primary winding **3** of the transformer **2.** The current amplitude of half-wave is determined by the voltage of the primary DC power supply **10,** the half-wave width is determined by resonance parameters of the transformer **2.** The half-wave width depends only on the design features of the transformer **2:** the magnetic properties of the transformer (BH curve), the number of primary turns, the number of secondary windings and the number of turns in each. For example, when the inductance of the primary winding of the transformer **3** equal 18.8 mH, half-wave width is 8 µs.

Most of the half-wave energy goes to the secondary windings **4.1 ÷ 4.m** of the transformer **2** and accumulates in storage capacities **6.1 ÷ 6.m;** the rest energy of half-wave is stored in the inductances of the transformer **2** and the in parasitic capacitances caused by the constructional features of the circuit components. When direct half-wave is finished, the stored energy recuperate back to primary AC-DC power supply **10** and generate reverse current half-wave on primary winding **3** of transformer **2** of same width (dotted line, **Fig.2**). The reverse half-way energy is also supplied to the secondary windings of **4.1 ÷ 4.m** and is accumulated in storage capacities **6.1 ÷ 6.m,** wherewith significantly increase the efficiency of the power module **1.**

During the **Doz.Imp.2** pulse there is the same process as the **Doz.Imp.1** but in the reverse direction. **Doz.Imp.2** pulse produces symmetrical "demagnetize" on the **transformer 2** and eliminates the magnetic saturation of the core in which the transformer **2** loses its performance.

In this case, the pulse width should not be less than the half-wave width in order not to break the resonance. Pulse width may be exceed 5 - 10% of the half-wave resonance width to prevent excessive reduction of the pulse width that can occur as a result of the precession of circuit parameters.

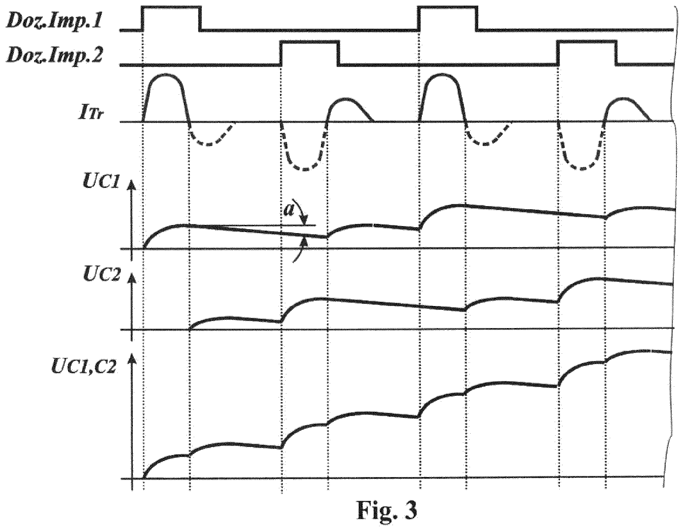

When the device is operating on the load, energy in storage capacities **6.1 ÷ 6.m** will be spent and diagram of functioning of the power module **1** modified **(****Fig. 3****)**. The angle **a** describes the voltage drop at storage capacitances **6.1 ÷ 6.m** and depends on the the load. Thus, each pulse provides a fixed dose of energy to be transmitted from the primary DC power supply **10** to a storage capacitances **6**.**1 ÷ 6.m** at constant frequency. Frequency is limited by resonance parameters of the transformer **2. Uₛₑₜ** is set by external controls through machine interface **15 (****Fig.1****)** and MCU **14,** this voltage must be reached and kept by the load current that does not exceed the **Iₛₑₜ**.

The command "Start" initiates a transfer **Doz.Imp.1** and **Doz.Imp.2** pulses in the power doser **8**. Fixed dose of energy begin to flow into storage capacitances **6.1 ÷ 6.m** with a fixed frequency. This process fill up energy of storage capacity **6**.**1 ÷ 6.m** that is released to the load. In this case the current and voltage at the load change according to the load impedance (capacitive, resistive or complex).

The measured I**ₘₑₐₛ** and **Uₘₑₐₛ** (voltage and current on the load) from a module for monitoring the output voltage and current **7** applied to a comparator **13** where they are compared with preset **Uₛₑₜ** and **Iₛₑₜ**. When **Iₘₑₐₛ** > **Iₛₑₜ** or **Uₘₑₐₛ** > **Uₛₑₜ,** comparator **13** produces a command **"Dsbl Fs".** This command disable passing pulses in the pipeline distributor of energy dose **12.** Pipeline distributor of energy dose **12,** not earlier than the end of the current pulse if one present at the time of the **Dsbl Fs** command, stops pulse transmission and delays delivery of the energy doses into storage capacity **6.1 - 6.m,** whereby the current and voltage at the load will fall. As soon as **Iₘₑₐₛ** < **Iₛₑₜ** or **Uₘₑₐₛ** < **Uₛₑₜ,** comparator **13** produces a command **"Enbl Fs".** This command enable passing pulses in the pipeline distributor of energy dose **12** and resume impulse transmission from a next (second in this case) pulse before the transmission was stopped. This provides the previously mentioned symmetrical "demagnetize" of Transformer **2** with interruptions of transmitting **Doz.Imp.1** and **Doz.Imp.2** on the power doser **8.** Pipeline distributor of energy dose **12** provides pipeline pulse transfer both at the monitoring of a current settings and monitoring of a voltage settings because autoregulation is produced by the energy parameter (energy dose), and the distribution between current and voltage is "self-regulation", depending on load. As long as the load voltage has not reached the set value, device is in the current source mode, in this mode the voltage on the load is determined by the load resistance, (the term "resistance" assumes a non-linear load, for example - capacitive). If the load voltage reaches a set value before the current reaches a set value, the device switches to the voltage source mode, in this mode current is determined by the load resistance.

Obviously if Iset and Uset are changed while the operation within predetermined limits of voltage and current, module for monitoring the output voltage and current **7,** comparator **13** and pipeline distributor of energy dose 12 will automatically handle its as they occur.

Using external control through computer interface **15, Iset** and **Uset** can be specified not as constant but as a set of values in accordance with a predetermined law. The MCU **14** receive a set of values from external control and transmit it to comparator **13.** If there is a short circuit in the load, there is a fast discharge of storage capacitances **6.1-6.m** and simultaneous interruption of transmitting **Doz.Imp.1** and **Doz.Imp.2** on the power doser **8** because **Iₘₑₐₛ** is out of limit. Even if the short circuit is continued, load current drop below the limiting level, transmission of Doz.Imp.1, Doz.Imp.2 pulses resume in volume of the minimum energy dosage that will be carried out to maintain specified load current at zero voltage.

### Variant II

Stabilized controlled universal high voltage power supply operates as follows:
The device is controlled by commands from an external control, coming through one of several computer interfaces **115.1-115.n** to one of **n** MCUs (for example MCU **114.2** on **Figure 4****).** That MCU is master. In this case **(****Figure 4****),** the other MCUs **114.1, 114.3-114.n** are slave, they are controlled through internal MCU bus **116.1-116.n.** In the other case, direct address mode enable to any MCUs **114.1-114.n.** MCUs decode commands and set up **Uset** value, that should be achieved and maintained on the load by the **Iset** value. The command "Start" initiates a transfer **Doz.Imp.1** and **Doz.Imp.2** pulses in the power dosers **108.1-108.n** which are part of power the blocks **1-N.**

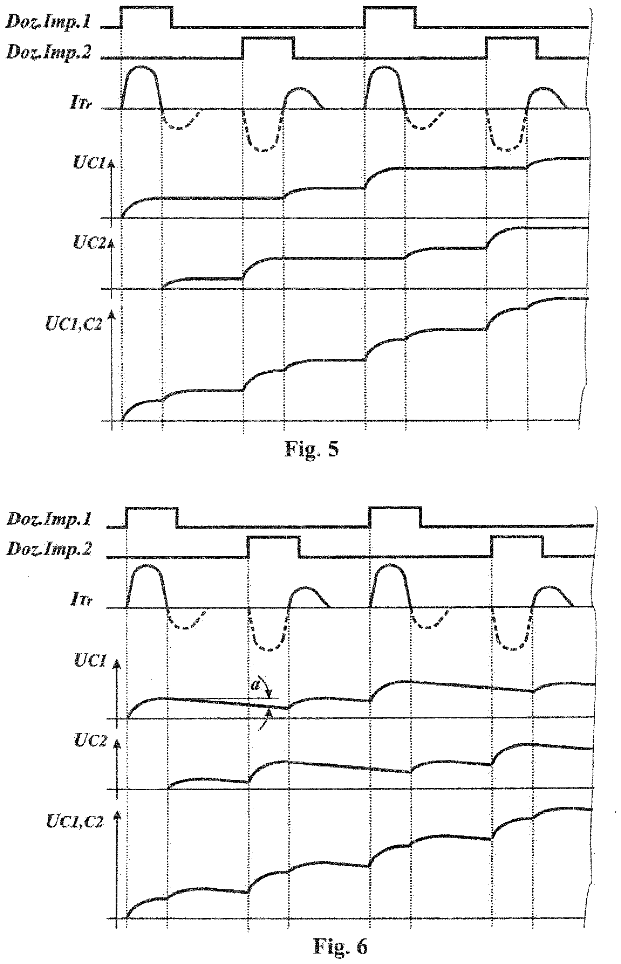

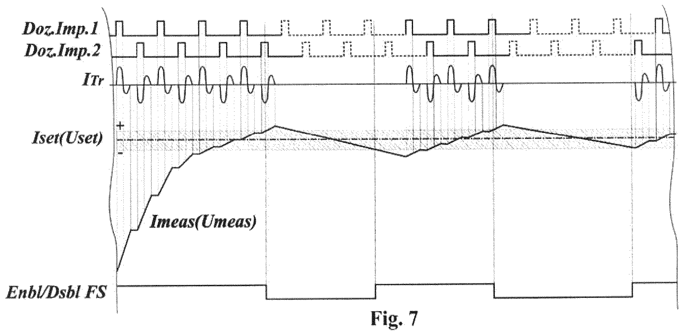

Power dosers **108.1-108.n** receive a fixed quantity of energy from DC power supply. One energy dose calculate according to the formula: ***E** = **U · I*** • **τ_{dz}**,
where **U -** voltage of the primary AC-DC voltage;
**I -** current of primary winding;
**τ_{dz} - Doz.Imp.1** and **Doz.Imp.2** pulse width;
**Doz.Imp.1** pulse turn on the corresponding switch pair of power doser **108.1-108.n.** Direct current **Iₜᵣ** in half wave form (solid line, **Fig. 5,6****,****7****)** flows from the primary DC power supplies **110.1-110.n** through the primary windings **103.1-103.n** of the transformer **102.1-102.n.** The current amplitude of half-wave is determined by the voltage of the primary DC power supply **110.1-110.n,** the half-wave width is determined by resonance parameters of the transformer **102**.**1**-**102**.**n**. The half-wave width depends only on the design features of the transformer **102.1-102.n:** the magnetic properties of the transformer (BH curve), the number of primary turns, the number of secondary windings and the number of turns in each.

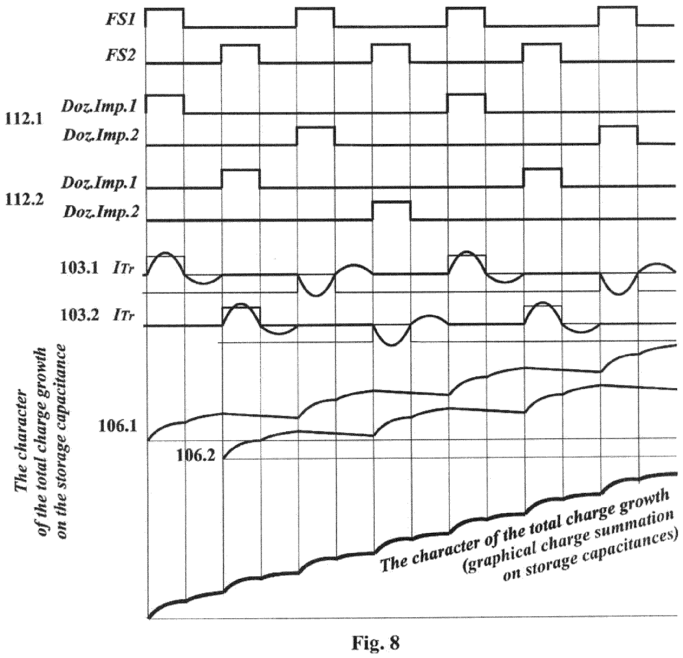

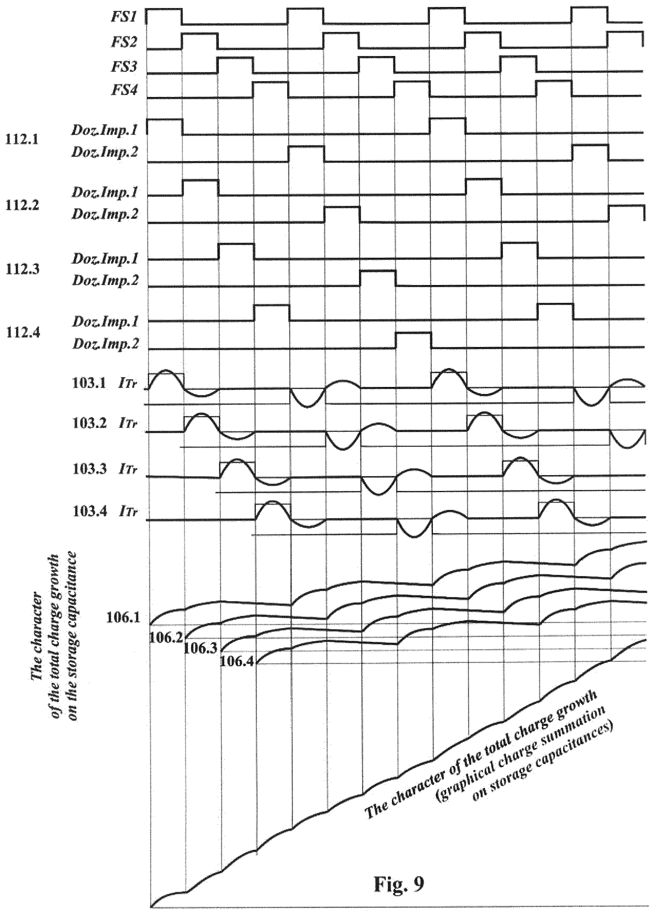

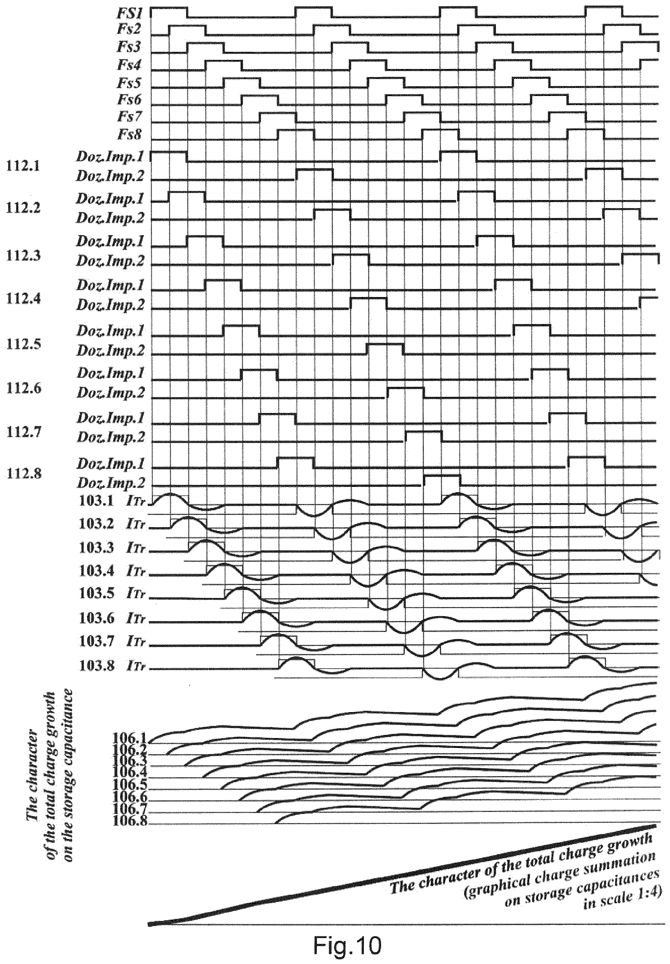

A reference oscillator **111** produce a set of reference frequencies **fs.1-fs.n** with phase offset and same period and dirty cycle. Phase offset depend on number of parallel power blocks **I-N** that are operated simultaneously. Functional diagram of two power blocks present on **Fig. 8****,** functional diagram of four power blocks present on **Fig.9** and on **Fig.10** is presented functional diagram of eight power blocks. Any **fs.1-fs.**n is reference frequency for corresponding pipeline distributor of energy dose **112.1-112.n.** Based on reference frequency, each pipeline distributor of energy dose **112.1-112.n** produce its **DozImp1** and **DozImp2** pair. (**Fig**. **7-10****).**

**Doz.Imp.1** pulse turn on the corresponding switch pair of power doser **108.1-108.n.** Direct current **Iₜᵣ** in half wave form (solid line, **Fig. 5,6****,****7****)** flows from the primary DC power supply **110.1-110.n** through the primary winding **103.1-103.n** of the transformer **102.1-102.n.** The current amplitude of half-wave is determined by the voltage of the primary DC power supply **110.1-110.n,** the half-wave width is determined by resonance parameters of the transformer **102.1-102.n.** The half-wave width depends only on the design features of the transformer **102.1-102.n:** the magnetic properties of the transformer (BH curve), the number of primary turns, the number of secondary windings and the number of turns in each. For example, when the inductance of the primary winding of the transformer **3** equal 18.8 mH, half-wave width is 8 µs.

Most of the half-wave energy goes to the secondary windings **104.2.1 ÷ 104.2.m** of the transformer **102.2** and accumulates in storage capacities **106.2.1 - 106.2.m;** the rest energy of half-wave is stored in the inductances of the transformer **102.2** and in the parasitic capacitances caused by the constructional features of the circuit components. When direct half-wave is finished, the stored energy recuperate back to primary DC power supply **110.2** and generate reverse current half-wave on primary winding 10**3.2** of transformer **102.2** of same width. The reverse half-wave energy is supplied to the secondary windings of **104.2.1 ÷ 104.2.m** and is accumulated in storage capacities **106.2.1 ÷ 106.2.m,** wherewith significantly increase the efficiency of the power module **101.2.**

During the **Doz.Imp.2** pulse there is the same process as the **Doz.Imp.1** but in the reverse direction. **Doz.Imp.2** pulse produces symmetrical "demagnetize" on the transformer **102.2** and eliminates the magnetic saturation of the core in which the transformer **102.2** loses its performance.

In this case the pulse width should not be less than the half-wave width in order not to break the resonance. Pulse width may be exceed 5 - 10% of the half-wave resonance width to prevent excessive reduction of the pulse width that can occur as a result of the precession of circuit parameters. Thus, each pulse provides a fixed dose of energy to be transmitted from the primary DC power supply **110.1-110.n** to a storage capacitances **106.2.1 ÷ 106.2.m** at constant frequency. Frequency is limited by resonance parameters of the transformer **102.2.** The command "Start" initiates a transfer **Doz.Imp.1** and **Doz.Imp.2** pulses in the power doser **108.2.** Fixed dose of energy begin to flow into storage capacitances **106.2.1 ÷ 106.2.m** with a fixed frequency. This process fill up energy of storage capacity **106.2.1 ÷ 106.2.m** that is released to the load. In this case the current and voltage at the load change according to the load impedance (capacitive, resistive or complex).

When the device is operating on the load, energy in storage capacities **106.2.1 ÷ 106.2.m** will be spent and diagram of functioning of the power block **II** modified **(****Fig. 6****).** The angle **a** describes the voltage drop at storage capacitances **106.2.1 ÷ 106.2.m** and depends on the the load. Thus, each pulse provides a fixed dose of energy to be transmitted from the primary DC power supply **110.1-110.n** to a storage capacitances **106.2.1 ÷ 106.2.m** at constant frequency. Frequency is limited by resonance parameters of the transformer **102.2.**

The measured **Iₘₑₐₛ** and **Uₘₑₐₛ** (voltage and current on the load) from a module for monitoring the output voltage and current **107.2 is** applied to a comparator **113.2** where they are compared with preset **Uₛₑₜ** and **Iₛₑₜ.** When **Iₘₑₐₛ** > **Iₛₑₜ** or **Uₘₑₐₛ** > **Uₛₑₜ**, comparator **113.2** produces a command **"Dsbl Fs".** This command disable passing pulses in the pipeline distributor of energy dose **112.2.** Pipeline distributor of energy dose **112.2,** not earlier than the end of the current pulse if one present at the time of the **Dsbl Fs** command, stops pulse transmission and delays delivery of the energy doses into storage capacity **106**.**2**.**1 ÷ 106.2.m,** whereby the current and voltage at the load will fall. As soon as **Imeas** < **Iₛₑₜ** or **Uₘₑₐₛ** < **Uₛₑₜ**, comparator **113.2** produces a command **"Enbl Fs"**. This command enable passing pulses in the pipeline distributor of energy dose **112.2** and resume impulse transmission from a next (second in this case) pulse before the transmission was stopped. This provides the previously mentioned symmetrical "demagnetize" of Transformer **102.2** with interruptions of transmitting **Doz.Imp.1** and **Doz.Imp.2** on the power doser **108.2.** Pipeline distributor of energy dose **112.2** provides pipeline pulse transfer both at the monitoring of a current settings and monitoring of a voltage settings because autoregulation is produced by the energy parameter (energy dose), and the distribution between current and voltage is "self-regulation", depending on load. As long as the load voltage has not reached the set value, device is in the current source mode, in which the voltage on the load is determined by the load resistance (the term "resistance" assumes a non-linear load, for example - capacitive). If the load voltage reaches a set value before the current reaches a set value, the device switches to the voltage source mode in which current is determined by the load resistance.

Obviously if **Iₛₑₜ** and **Uₛₑₜ** are changed while the operation within predetermined limits of voltage and current, module for monitoring the output voltage and current **107.2,** comparator **113.2** and pipeline distributor of energy dose **112.2** will automatically handle its as they occur.

Using external control through computer interface **115.2, Iₛₑₜ** and **Uₛₑₜ** can be specified not as constant but as a set of values in accordance with a predetermined law. The MCU **114.2** receive a set of values from external control and transmit it to comparator **113.2.** If there is a short circuit in the load, there is a fast discharge of storage capacitances **106.2.1 ÷ 106.2.m** and simultaneous interrupt transmission of **Doz.Imp.1** and **Doz.Imp.2** on the power doser **108.2** because **Iₘₑₐₛ** is out of limit. Even if the short circuit is continued, load current drop below the limiting level, transmission of **Doz.Imp.1, Doz.Imp.2** pulses resume in volume of the minimum energy dosage that will be carried out to maintain specified load current at zero voltage.

The energy dosage flow is based on **fs.1-fs.n** while n power blocks operate simultaneous and parallel **(****Fig.4****).** Reference frequencies **fs.1-fs.n** are phase shifted (Fig. 8-10), total charge of storage capacitances grows that more uniform, than it is more quantity of power blocks. Therefore current and voltage on the load are reduced.

If there are **I ÷ N** parallel power blocks, each of the N power block must have at **n** times less power then total output power of device, and thus, power block can be composed of smaller size transformers and low power switches.

The claimed group of inventions is characterized by a set of essential features.

The claimed group of inventions conform with the conditions of novelty and industrial applicability, because its implementation is possible by using the existing technologies.

## Claims

1. Stabilized controlled universal high voltage power supply including a power module, that contains transformer with **m** secondary winding sections and **m** rectifiers, to each section of the secondary windings of the transformer a corresponding rectifier input being connected, rectifiers for all outputs being connected in series, **wherein said** stabilized controlled universal high voltage power supply is equipped with a primary DC power supply, power doser, pulse generator of energy doses, a module for monitoring the output voltage and current, computer interface and MCU, wherein the pulse generator of energy doses includes electrically interconnected reference oscillator, pipeline distributor of energy dose pulses, and a comparator, wherein the pulse generator of energy doses includes electrically interconnected reference oscillator, pipeline distributor of energy dose pulses, and a comparator, wherein the power doser is connected to the transformer primary winding and has four inputs, two of which are connected with the primary DC power supply, and the other two inputs are connected to the outputs of pipeline distributor of energy dose pulses, each of m rectifier assemblies are designed as a rectifier, that is connected to the storage capacity, the outputs of which are connected to the input of module for monitoring the output voltage and current, the modules outputs are connected to the comparator and the MCU, MCU is connected with the computer interface and the outputs of MCU are connected to comparator input of pipeline distributor of energy dose pulses.

2. The stabilized controlled universal high voltage power supply according to claim 1 **wherein said** that pulse generator of energy dose is equipped with pipeline distributor of energy dose, that has two inputs, one of them is connected to the output of the reference oscillator, another is connected to output of the comparator.

3. The stabilized controlled universal high voltage power supply according to claim 1 **wherein** each of **m** rectifiers is equipped with an even number of storage capacitances, mounted symmetrically about the rectifier.

4. The stabilized controlled universal high voltage power supply according to claim 1 **wherein said** primary DC power supply is formed by either a single-phase or three-phase rectifier scheme.

5. The stabilized controlled universal high voltage power supply according to claim 1 **wherein said** power doser is formed in a bridge circuit, the switches inputs of power doser are connected to the outputs of the primary DC power supply.

6. Stabilized controlled universal high voltage power supply that includes a power module containing m sections transformer secondary winding and m rectifiers, each section of the secondary windings of the transformer is connected to the corresponding input of the rectifier, a rectifiers for all outputs are connected in series, **wherein said** stabilized controlled universal high voltage power supply is equipped with **N** power blocks, each power block includes power module, reference oscillator with n output, means of external control, each power module is equipped with the primary DC power supply, the power doser, the module for monitoring the output voltage and current, pulse generator of energy doses, computer interface and MCU, wherein each power block includes electrically interconnected reference oscillator, pipeline distributor of energy dose and comparator, wherein the power doser is connected to the transformer primary winding and power doser has four inputs, two of them are connected to the primary DC power supply, and the other two inputs are connected to the outputs of pipeline distributor of energy dose, each of m rectifier assemblies is designed as a rectifier, that is connected to the storage capacity, the outputs of storage capacity are connected to the input of module for monitoring the output voltage and current, the outputs of that module are connected to the comparator and the MCU, MCU is connected to the computer interface and the outputs of MCU is connected to comparator input of pipeline distributor of energy dose, wherein the input of pipeline distributor of energy dose pulses of each N energy block is connected to corresponding n output of reference oscillator and each energy block output is connected to the means of external control in parallel with each other.

7. The stabilized controlled universal high voltage power supply according to claim 6 **wherein said** computer interfaces of N power blocks are connected in parallel by MCU bus.

8. The stabilized controlled universal high voltage power supply according to claim 6 **wherein** each **of m** power module rectifiers is equipped with an even number of storage capacitances, mounted symmetrically with respect to the rectifier.

9. The stabilized controlled universal high voltage power supply according to claim 6 **wherein said** primary DC power supply of power block is formed by either a single-phase or three-phase rectifier scheme.

10. The stabilized controlled universal high voltage power supply according to claim 6 **wherein said** power doser is implemented in a bridge circuit and power doser inputs are connected to the outputs of the primary DC power supply.

11. The stabilized controlled universal high voltage power supply according to claim 6, equipped with an even number of power blocks, the reference oscillator being formed with an even number of outputs.

12. The stabilized controlled universal high voltage power supply according to claim 6, equipped with an odd number of power blocks, the reference oscillator being formed with an odd number of outputs.
